# EUROPEAN PATENT SPECIFICATION

(11) **EP 4 521 730 B1**
(45) Date of publication and mention of the grant of the patent: **14.10.2026**
(21) Application number: 24197073.0
(22) Date of filing: 28.08.2024
(51) Int. Cl.: H04N 1/00, B41J 3/407, H04N 1/54

(54) **PRINTING DEVICE AND PRINTING METHOD**
DRUCKVORRICHTUNG UND DRUCKVERFAHREN
DISPOSITIF D'IMPRESSION ET PROCÉDÉ D'IMPRESSION

(30) Priority: 08.09.2023 JP 2023146109
(43) Date of publication of application: 12.03.2025
(73) Proprietor: Seiko Epson Corporation, Tokyo 160-8801 (JP)
(72) Inventor: KAYAHARA, Naoki, Suwa-shi, Nagano, 392-8502 (JP); CARNELLI, Luigi Mario, 22076 Mozzate (Como) (IT)
(74) Representative: MERH-IP Matias Erny Reichl Hoffmann Patentanwälte PartG mbB

(56) References cited:
- EP-A1- 4 005 807
- AU-A1- 2019 201 825

## Description

The present application is based on, and claims priority from JP Application Serial Number 2023-146109, filed September 8, 2023.

### BACKGROUND

### 1. Technical Field

The present disclosure relates to a printing device and a printing method.

### 2. Related Art

A configuration is known that is an inkjet printer that prints on a medium using a head having nozzles configure to eject liquid droplets and that includes an imaging device as a surface-information-acquiring device that acquires information on surfaces of the medium (see JP-A-2023-63795).

Here, it is assumed that a fabric on which a pattern is formed is used as a medium and printing is performed on the transported fabric. In many cases, a pattern is periodically formed on the fabric. The user prepares a colored image for coloring the pattern of the fabric. During transport, distortion, stretching, and shrinking (hereinafter collectively referred to as "distortion") may occur in the fabric. When a colored image is superimposed and printed on the pattern of the fabric in which such distortion occurs, a deviation occurs in the shapes of the pattern and the colored pixels. Therefore, it has been necessary for the user to perform an editing operation using photo-editing software to match the shape of the colored image with the shape of the pattern in the captured image obtained by capturing the image of the fabric being transported.

However, the editing work described above has been a great burden for the user. Considering such a situation, there is a demand for an improvement for improving the quality of a printed matter by reducing a burden on a user required for printing performed on a medium which may include distortion.

Document EP 4005807 A1 relates to a printing apparatus that includes a pattern correction unit configured to change a mutual positional relationship among a plurality of divided pieces of first image data obtained by dividing first image data representing a first pattern formed in a fabric to generate corrected first image data having a center made up of four corners of the first image data, a pattern extracting unit configured to compare the corrected first image data with second image data generated by imaging the fabric to extract a pattern region corresponding to a second pattern represented by the corrected first image data from the second image data, a printing image generation unit configured to arrange third image data representing an image to be printed overlaid on the first pattern so as to match a region having centers of the pattern regions as four corners to generate printing image data, and a printing control unit configured to cause a printing unit to print the printing image data on the fabric.

### SUMMARY

The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention. A printing device includes a transport section that transports in a transport direction a medium on which a pattern is formed; an imaging section that captures an image of the medium transported by the transport section; a printing section configured to print on the medium transported by the transport section; and a control section, wherein the control section, as preparation processing for print production processing, which includes printing by the printing section, acquires first pattern image data having information of the shape of the pattern and first captured image data that was generated by the imaging section capturing the image of the medium, specifies, from the first captured image data, a first feature color and a second feature color that is brighter than the first feature color, generates binary image data with a first color and a second color that is brighter than the first color by binarization of the first pattern image data, generates second pattern image data by replacing the first color of the binary image data with the first feature color and replacing the second color with the second feature color, and sets a feature point for an edge of a pattern in the second pattern image data and as the print production process, acquires second captured image data generated by capturing an image of the medium by the imaging section, calculates, based on collation between the second captured image data and the second pattern image data, a correction value of the feature point required to match the shape of the pattern in the second pattern image data with the shape of the pattern in the second captured image data, applies the correction value to a colored image for coloring the pattern in order to deform the colored image, and causes the printing section to print, on the medium, the colored image that was captured by the imaging section for generation of the second captured image data and that was deformed.

A printing method includes an image capturing step for capturing an image of a medium that is transported in the transport direction and on which a pattern is formed; a printed matter production step including printing on the medium transported in the transport direction; and a preparation step for the printed matter production step, wherein the preparation step has acquiring first pattern image data having information on a shape of the pattern and first captured image data generated by capturing the image of the medium in a first one of the image capturing step, specifies, from the first captured image data, a first feature color and a second feature color that is brighter than the first feature color, generates binary image data with a first color and a second color that is brighter than the first color by binarization of the first pattern image data, generates second pattern image data by replacing the first color of the binary image data with the first feature color and replacing the second color with the second feature color, and sets a feature point for an edge of a pattern in the second pattern image data and the printed matter production step has acquiring the second captured image data generated by imaging the medium in a second one of the image capturing step, calculates, based on collation between the second captured image data and the second pattern image data, a correction value of the feature point required to match the shape of the pattern in the second pattern image data with the shape of the pattern in the second captured image data, applies the correction value to a colored image for coloring the pattern in order to deform the colored image, and printing, on the medium, the colored image that was captured in the second image capturing step and that has been deformed.

### BRIEF DESCRIPTION OF THE DRAWINGS

FIG. 1 is a simple block diagram showing a configuration of a printing device.
FIG. 2A is a view showing a configuration of the transported fabric and its vicinity as viewed from above.
FIG. 2B is a view from upstream of part of the configuration shown in FIG. 2A.
FIG. 3 is a flowchart showing a printing process.
FIG. 4A is a diagram showing an example of first pattern image data.
FIG. 4B is a diagram showing an example of first captured image data.
FIG. 5 is a diagram exemplifying a histogram of first captured image data.
FIG. 6A is a diagram showing an example of binary image data.
FIG. 6B is a diagram showing an example of second pattern image data. FIG. 6C is a diagram exemplifying a state in which a feature point is set in the second pattern image data.
Fig. 7 is a diagram for explaining step S170.
Fig. 8 is a diagram for explaining a specific example of steps S170 and S180.
FIG. 9 is a diagram for explaining a second embodiment.

### DESCRIPTION OF EMBODIMENTS

Hereinafter, embodiments of the present disclosure will be described with reference to the drawings. Each of the drawings is merely an example for explaining the present embodiment. Since each drawing is an example, the ratio, the shape, and the shading may not be accurate, may not match each other, or may be partially omitted.

### 1. Equipment configuration

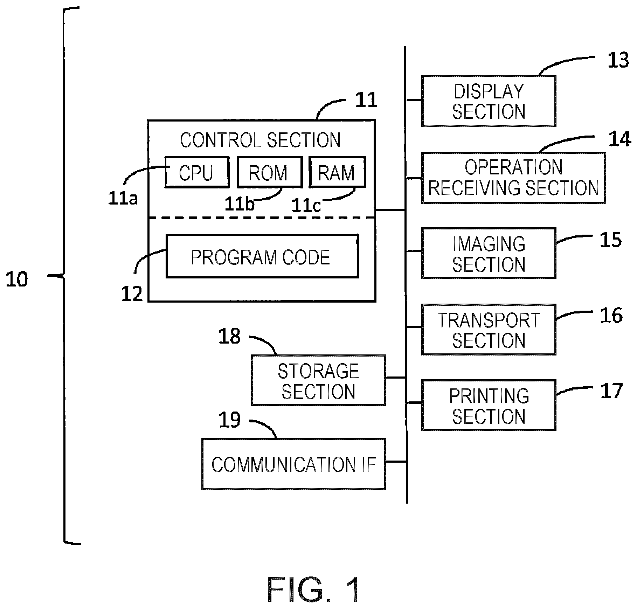

FIG. 1 simply shows a configuration of a printing device 10 according to the present embodiment. The printing device 10 executes a printing method. The printing device 10 includes a control section 11, a display section 13, an operation receiving section 14, an imaging section 15, a transport section 16, a printing section 17, a storage section 18, a communication IF 19, and the like. IF is an abbreviation for interface. The control section 11 is configured to include one or a plurality of ICs having a CPU 11a as a processor, a ROM 11b, a RAM 11c, and the like, and other nonvolatile memory, and the like.

In the control section 11, the processor, that is, the CPU 11a, performs a calculation process according to one or more program codes 12 stored in the ROM 11b, another memory, or the like by using the RAM 11c or the like as a work area to control the printing device 10. Note that the processor is not limited to a single CPU and may be configured to perform processes by a plurality of CPUs or a hardware circuit such as an ASIC or may be configured to perform processes in cooperation with a CPU and a hardware circuit.

The display section 13 is a section for displaying visual information, and is configured by, for example, a liquid crystal display, an organic EL display, or the like. The display section 13 may have a configuration including a display and a drive circuit for driving the display. The operation receiving section 14 is a unit for receiving an operation by a user and is realized by, for example, a physical button, a touch panel, a mouse, a keyboard, or the like. Of course, the touch panel may be realized as one function of the display section 13. The display section 13 and the operation receiving section 14 may be a part of the configuration of the printing device 10 or may be a peripheral device externally attached to the printing device 10.

The storage section 18 is, for example, a hard disk drive, a solid state drive, or other memory storage means. A part of the memory of the control section 11 may be regarded as the storage section 18. The storage section 18 may be regarded as a part of the control section 11.

The communication IF 19 is a general term for one or more IFs for the printing device 10 to communicate with an external device (not shown) in a wired or wireless manner in accordance with a predetermined communication protocol that includes a known communication standard. The external device is, for example, a personal computer (PC), a server, a smartphone, a tablet terminal, or a scanner.

The transport section 16 is a mechanism for transporting the medium in a predetermined transport direction under the control of the control section 11. In the present embodiment, it is assumed that the medium is mainly a fabric such as Jacquard fabric or a lace fabric on which a pattern with a three-dimensional effect is formed by devising the weaving method of yarns or fibers. On the fabric, one or a group of patterns are formed so as to be repeatedly arranged. In the following, one or a group of patterns will be treated as one pattern. However, the medium may be a material other than a fabric as long as there is a possibility that distortion occurs during transport, and may be, for example, a sheet of paper on which a pattern is formed.

The transport section 16 includes, for example, a feeding roller that feeds out fabric, which is wound in a roll shape and not yet printed on, downstream in the transport direction, a belt or a roller for further transporting the fed fabric, a winding roller that winds the fabric after printing into a roll shape again and collects the fabric, a motor for rotating each roller or belt, and the like. Hereinafter, upstream and downstream in the transport direction by the transport section 16 will be simply referred to as upstream and downstream.

The imaging section 15 captures an image of the medium transported by the transport section 16 under the control of the control section 11. The imaging section 15 includes a light source that irradiates the medium, an image sensor that receives reflected light from the medium and outputs an electrical signal as the image capture result, and a circuit that performs analog-digital conversion or the like on the output electrical signal and generates captured image data, and the like. A part of the circuit included in the control section 11 may be regarded as a part of the imaging section 15.

The printing section 17 performs printing on the medium transported by the transport section 16 under the control of the control section 11. The printing section 17 is provided downstream of the imaging section 15. The printing section 17 performs printing on a medium based on the print data transmitted from the control section 11. The printing section 17 can execute printing by ejecting ink of a plurality of colors such as cyan, magenta, yellow, and black by an inkjet system, for example. According to the inkjet method, the printing section 17 performs printing on a medium by ejecting or not ejecting dots of ink from nozzles (not illustrated) based on printing data in which dot on or dot off of each ink is defined for each pixel.

The printing device 10 may be a single printer or may be realized by a plurality of printing devices communicably connected to each other. The printing device 10 constituted by a plurality of devices may also be referred to as a printing system 10. The printing system 10 is configured to include, for example, a printer including the imaging section 15, the transport section 16, and the printing section 17, and one or more information processing apparatuses functioning as the control section 11. The information processing apparatus is, for example, a PC, a server, a smartphone, a tablet terminal, or an apparatus having a processing capability equivalent to them. In the printing system 10, an apparatus that serves as the control section 11 may be referred to as an image processing apparatus, a print control apparatus, or the like. It is also possible to consider a part of the apparatus constituting the printing system 10 as the disclosure.

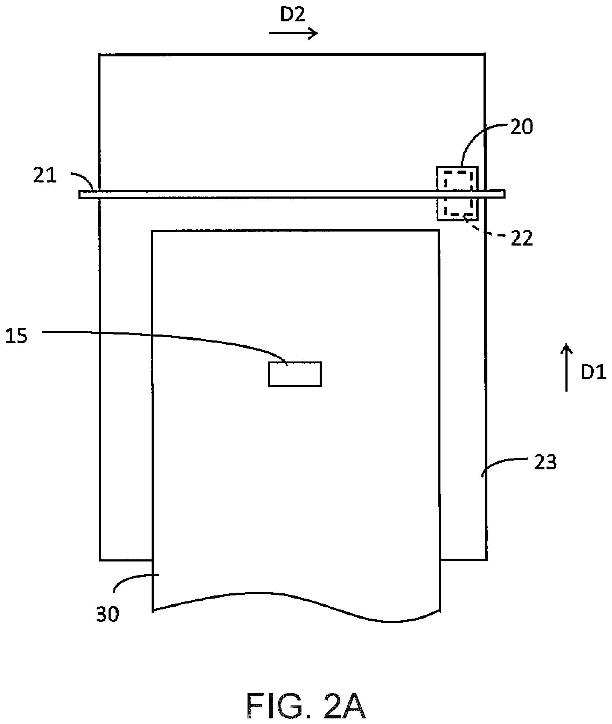

FIG. 2A shows the configuration of fabric 30 as a medium to be transported and the vicinity thereof from a viewpoint facing downward from above. In FIG. 2A, the pattern formed in advance on the fabric 30 is omitted. The transport direction of the fabric 30 by the transport section 16 is indicated by a reference numeral D1. Reference numeral 23 denotes an endless belt 23 as a part of the transport section 16. The fabric 30 placed on the endless belt 23 is transported from upstream to downstream by rotation of the endless belt 23.

A carriage 20 is arranged above the endless belt 23. The carriage 20 is reciprocable along a direction D2 that intersects the transport direction D1. Here, the intersection is orthogonal, and it may be understood that the orthogonal includes not only a strict orthogonal but also an error occurring in the manufacture of a product. The carriage 20 moves along an elongated guide member 21 in the direction D2. The direction D2 is also referred to as a main scanning direction of the carriage 20 or a print head 22. The direction D2 is also referred to as the width direction of the fabric 30.

The carriage 20 is provided with the print head 22 ejectable ink. That is, the print head 22 reciprocates along the width direction D2 together with the carriage 20. The carriage 20 and the print head 22 constitute the printing section 17. Although not shown, a plurality of nozzles are open on a lower surface of the print head 22 opposite to the endless belt 23. The print head 22 ejects ink from the nozzles based on the print data while moving along the width direction D2 together with the carriage 20.

As shown in FIG. 2A, the imaging section 15 is arranged at a predetermined position above the endless belt 23 and upstream the carriage 20 and the print head 22.

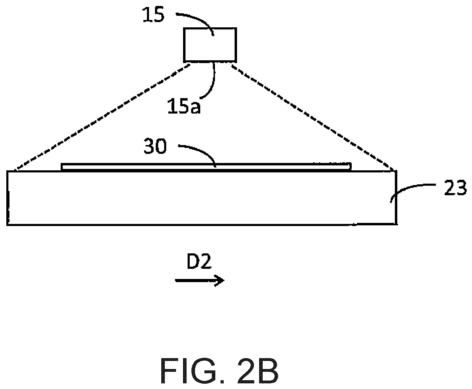

FIG. 2B shows a portion of the configuration shown in FIG. 2A viewed from an upstream to downstream. The imaging section 15 has a lower surface facing the endless belt 23 as an imaging surface 15a and captures the fabric 30 on the endless belt 23 through the imaging surface 15a. The imaging section 15 is, for example, a line-scan type camera in which a plurality of imaging elements is arranged along the width direction D2. The imaging section 15 repeats capturing on a line-by-line basis through a lens and an imaging element (not shown) provided on the imaging surface 15a. In FIG. 2B, an image pickup range in the width direction D2 by the imaging section 15 is exemplified by broken line. The imaging section 15 can capture almost the entire range of the endless belt 23 in the width direction D2 by the function of the lens.

The configuration of the imaging section 15 is not limited to the examples of FIGS. 2A and 2B. For example, a configuration may be adopted in which a plurality of imaging sections 15 is arranged along the width direction D2 above the endless belt 23, and each of the plurality of imaging sections 15 takes charge of imaging a part of the entire range of the endless belt 23 in the width direction D2. Alternatively, the imaging section 15 may be a line sensor configured by arranging a plurality of imaging elements over substantially the entire range of the endless belt 23 in the width direction D2. Alternatively, in the same manner as the print head 22 is mounted on the carriage 20, the imaging section 15 may be mounted on a carriage movable along the width direction D2 and may be configured to image the endless belt 23 while being moved in the width direction D2 by the carriage. The print head 22 may not be configured to be moved along the width direction D2 by the carriage 20, but may be a so-called line head having a size capable of ejecting ink over substantially the entire range of the endless belt 23 in the width direction D2 in a stationary state.

### 2. Printing method

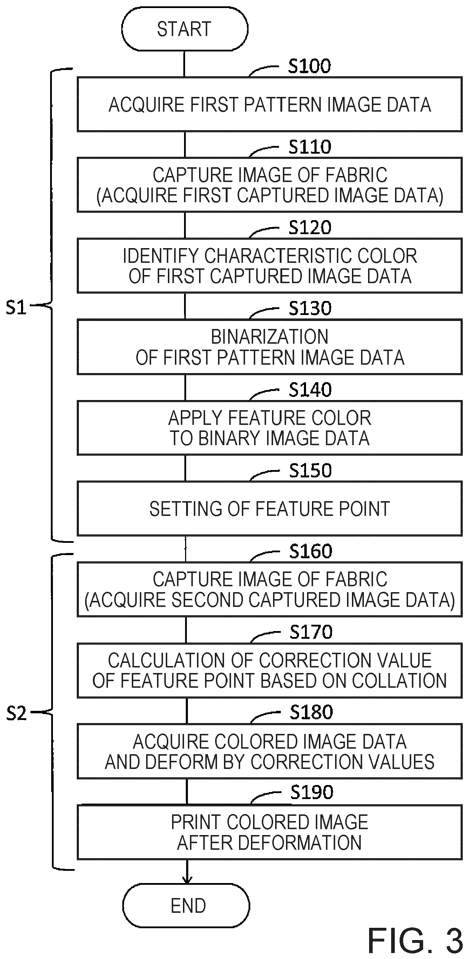

FIG. 3 is a flowchart showing a printing process executed by the control section 11 according to the program code 12. The flow chart is generally composed of a printed matter production process S2 and a preparation process S1 for the printed matter production process S2. The preparation process S1 is also referred to as preparation step, and the printed matter production process S2 is also referred to as printed matter production step. In FIG. 3, the preparation process S1 and the printed matter production process S2 are described in a single flowchart continuously, but there may be a time gap between the preparation process S1 and the printed matter production process S2, and it is possible to repeatedly execute the printed matter production process S2 any number of times after the preparation process S1.

In step S100, the control section 11 acquires pattern image data having information on the shape of the pattern in the fabric 30. The pattern image data acquired in step S100 is also referred to as "first pattern image data". The first pattern image data may have information about the shape of the pattern in any manner, regardless of whether directly or indirectly. For example, the first pattern image data is image data representing the shape of the pattern by color. "Expressing the shape of the pattern by color" means to express the difference between the places where the pattern is present and the places where it is not present, the difference between the patterns, and the like so as to be recognizable by the presence or absence of color, the difference between colors, and the like. Therefore, the color in the first pattern image data has no relation to the color of printing. There are various color systems adopted by the first pattern image data to express colors, such as an RGB color system and an L*a*b* table color system. The first pattern image data may be image data in a raster format or image data in a vector format. The first pattern image data may be CAD data.

In this embodiment, it is assumed that the first pattern image data and "colored image data" described later are data generated in advance. The first pattern image data and the colored image data may be generated by any method but are generally generated by a designer or a product planner. The first pattern image data is stored in advance in the storage section 18, for example. The control section 11 acquires the first pattern image data from the storage section 18. Alternatively, the first pattern image data is input from an external device via the communication IF 19. The control section 11 acquires the input first pattern image data. The control section 11 may acquire the first pattern image data from a storage medium such as a memory card (not shown) externally attached to the printing device 10. Step S100 need only be executed before step S130 described below.

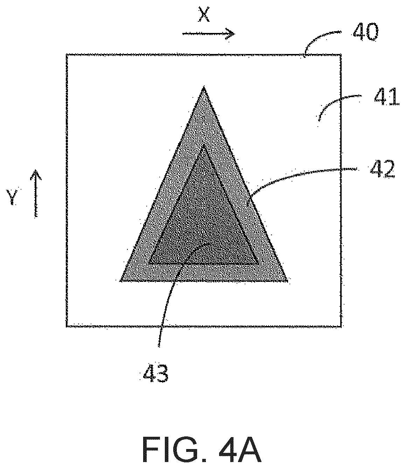

FIG. 4A shows an example of first pattern image data 40. The file format of the first pattern image data 40 does not matter, but for example, the first pattern image data 40 is an image file created by CAD software. According to FIG. 4A, the first pattern image data 40 is represented by a first region 41 of white, a second region 42 of a predetermined color darker than white, and a third region 43 of another predetermined color darker than the second region 42. That is, in the first pattern image data 40, the second region 42 and the third region 43 represent one pattern, and the first region 41 is a region without a pattern, that is, a background. Although there are various designs of actual patterns and more complicated patterns as a matter of course, here, the patterns are assumed to be simple triangles for easy understanding. The X-axis and the Y-axis orthogonal to each other in FIG. 4A and the like are two axes for defining the coordinates of the image data, the Y-axis direction corresponds to the transport direction D1, and the X-axis direction corresponds to the width direction D2.

In step S110, the control section 11 captures the image of the fabric 30. That is, the transport section 16 is caused to start transport of the medium 30, and the imaging section 15 is caused to capture the image. As a result of such image capture, a captured image data is generated, and the control section 11 acquires the captured image data. The captured image data is bitmap data having a gradation value for each pixel. The gradation value is represented by, for example, a 256-gradation of 0 to 255. The captured image data acquired in step 110 is also referred to as "first captured image data". In step 110, since it is sufficient if the image of the pattern of the fabric 30 is captured, the transport section 16 should transport the fabric 30 that has passed through the position of the imaging section 15 downstream by a predetermined distance.

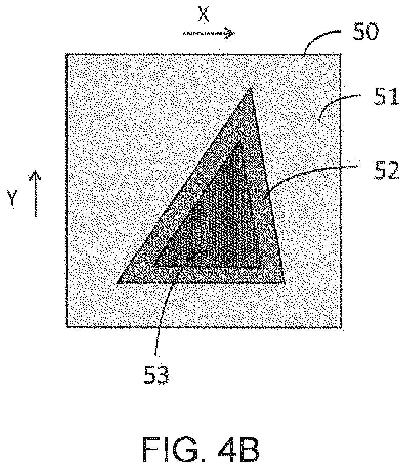

FIG. 4B shows an example of first captured image data 50. Since the first captured image data 50 is an image capture result of the fabric 30, the FIG. 4B shows only a partial range including one pattern in the first captured image data 50, strictly speaking. According to FIG. 4B, the first captured image data 50 is represented by a fourth region 51, a fifth region 52, and a sixth region 53, which have different colors. As can be seen from a comparison with FIG. 4A, in the first captured image data 50, the fifth region 52 and the sixth region 53 represent one pattern, and the fourth region 51 is a background of the pattern. The color of the fourth region 51 may be interpreted as the color of the fabric 30 itself.

As can be seen from a comparison with FIG. 4A, the triangular pattern formed by the fifth region 52 and the sixth region 53 of the first captured image data 50 is distorted as compared with the triangular pattern formed by the second region 42 and the third region 43 of the first pattern image data 40. This distortion is caused by distortion that occurred in the fabric 30 during transport at the time of image capture in step S110. The first pattern image data 40 and the colored image data each represent an ideal pattern without distortion.

In step 120, the control section 11 specifies a first feature color and a second feature color brighter than the first feature color from the first captured image data. The feature color is a color that is distributed relatively more in the image data. Specifically, the control section 11 generates a histogram of the colors in the first captured image data and specifies each color corresponding to each distribution peak appearing in the histogram as the first feature color and the second feature color.

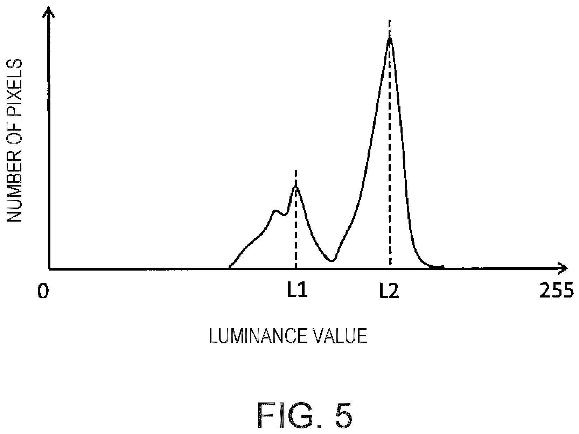

FIG. 5 exemplify a histogram of the first captured image data 50. Here, it is assumed that the first captured image data 50 serving as a generation source of the histogram is grayscaled image data having a luminance value for each pixel. That is, the luminance value is regarded as a color. If the first captured image data 50 generated by the imaging section 15 is, for example, color image data having gradation values of red (R), green (G), and blue (B) for each pixel, the control section 11 may generate a histogram after converting the RGB values for each pixel of the first captured image data 50 into luminance values and converting them into gray scales.

According to FIG. 5, the histogram is a frequency distribution in which the horizontal axis represents the gradation value of the luminance value, and the vertical axis represents the number of pixels. According to the histogram, a peak in the number of pixels occurs at each of the luminance values L1 and L2. Also, L1 < L2. Therefore, in the example of FIG. 5, the control section 11 may specify the luminance value L1 as the first feature color and the luminance value L2 as the second feature color. According to FIG. 4B and FIG. 5, the luminance value L1 is a luminance value corresponding to a peak of a mountain in which luminance values corresponding to the colors of the fifth region 52 and the sixth region 53 corresponding to the pattern are intensively distributed. On the other hand, the luminance value L2 is a luminance value corresponding to the peak of the mountain in which distribution of luminance values corresponding to the color of the fourth region 51, which is brighter than the fifth region 52 and the sixth region 53, is concentrated. When three or more peaks are created in the histogram generated from the first captured image data 50, the control section 11 may select the two higher peaks among them and specify them as the first feature color and the second feature color.

In step 130, the control section 11 binarizes the first pattern image data to generate "binary image data". First, the control section 11 converts the first pattern image data into grayscale data. If necessary, the control section 11 may convert the file format of the first pattern image data into a bitmap and then convert it into grayscale data. Then, the control section 11 compares the luminance value of each pixel of the first pattern image data with a predetermined threshold value, and binarizes the pixel into a black pixel having a luminance value of 0 or a white pixel having a luminance value of 255 as binary image data. The black pixels in the binary image data correspond to the first color, and the white pixels correspond to the second color.

As shown in FIG. 4A, the first pattern image data 40 is composed of a background by the first region 41 and a pattern by the second region 42 and the third region 43 which are darker in color than the background. Therefore, the threshold value is set to a gradation value such that the background and the pattern can be separated, for example, the luminance value = 200. The control section 11 converts a pixel having a luminance value equal to or lower than the threshold value among the pixels of the first pattern image data into a black pixel and converts a pixel having a luminance value higher than the threshold value into a white pixel.

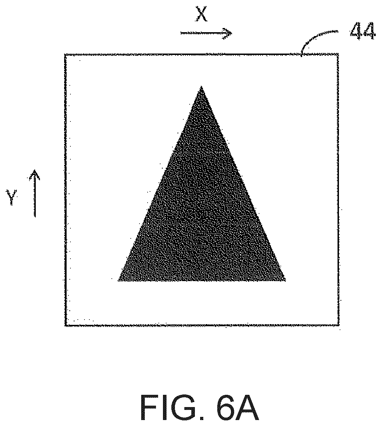

FIG. 6A exemplifies a binary image data 44 obtained by binarization of the first pattern image data 40 in step S130. As can be seen from the comparison with the first pattern image data 40 in FIG. 4A, in the binary image data 44, the entire pattern consists of black pixels, and the region other than the pattern consists of white pixels.

In step S140, the control section 11 applies the first feature color and the second feature color specified in step S120 to the binary image data generated in step S130. Here, "apply" refers to a process of replacing a first color of the binary image data, that is, a black pixel with a first feature color, and replacing a second color of the binary image data, that is, a white pixel with a second feature color. The binary image data after applying the first feature color and the second feature color is referred to as "second pattern image data".

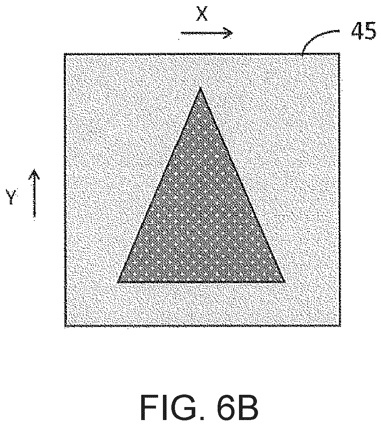

FIG. 6B exemplify second pattern image data 45 generated in step S140. In the second pattern image data 45, the area of the pattern that is black pixels in the binary image data 44 of FIG. 6A is the first feature color and the background area that is white pixels in the binary image data 44 is the second feature color. As can be seen from a comparison with FIG. 4B, the second pattern image data 45 has a color tone considerably like a color tone of the first captured image data 50.

In step S150, the control section 11 sets the feature point for the edge of the pattern in the second pattern image data. The edge of the pattern can be easily identified because it is pixels at positions where the second feature color switches to the first feature color. The feature points may be referred to as control points or the like.

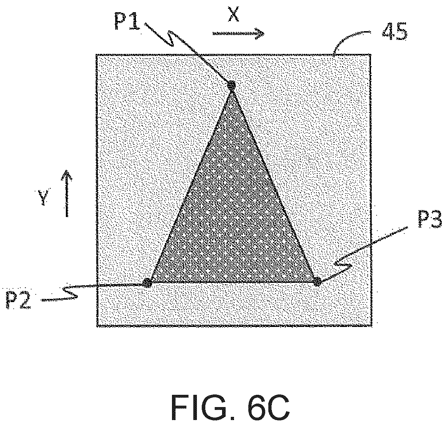

FIG. 6C shows a state where the feature points P1, P2, and P3 are set on the edge of the pattern in the second pattern image data 45. FIG. 6C exemplifies the case in which feature points P1, P2, and P3 are set at the intersections of the edges of the pattern, that is, the vertices of the triangle that is the pattern. Of course, the number of feature points to be set is not limited. The control section 11 stores the second pattern image data with the feature points set in the storage section 18 so that the second pattern image data can be used at any timing thereafter.

The steps S100 to S150 described above constitute the preparation process S1.

Next, the printed matter production process S2 in steps S160 to S190 will be described.

In step S160, the control section 11 performs image capture of the fabric 30. The description of step S160 basically applies, with whatever changes are necessary, to the description of step S110. Naturally, the fabric 30 whose image is captured in step S110 and the fabric 30 whose image is captured in step S160 have the same pattern. The captured image data acquired in step S160 is referred to as "second captured image data". As one case, it is conceivable to perform image capture by resuming transport in step S160 for the fabric 30 from the state in which the image capture in step S110 was completed and stopped. As another case, it is also conceivable to newly set the fabric 30 having the same pattern as that of the fabric 30 whose image was captured in step S110 in the transport section 16 and start transport in step S160 to perform image capture.

The first captured image data and the second captured image data are a result of capturing an image of the fabric 30 of the same pattern that is naturally substantially the same image data. However, because the timing of image capture is different, there may be subtle differences in color between the two, the presence or degree of distortion of the fabric 30 at the time of imaging may be different, and the like. Since the transport of the fabric 30 that started in step S160 is also for printing in step S190, the control section 11 ends the transport after printing in step S190 is completed.

In step 170, the control section 11 calculates a correction value of the feature point necessary for matching the shape of the pattern in the second pattern image data with the shape of the pattern in the second captured image data based on collation between the second captured image data and the second pattern image data.

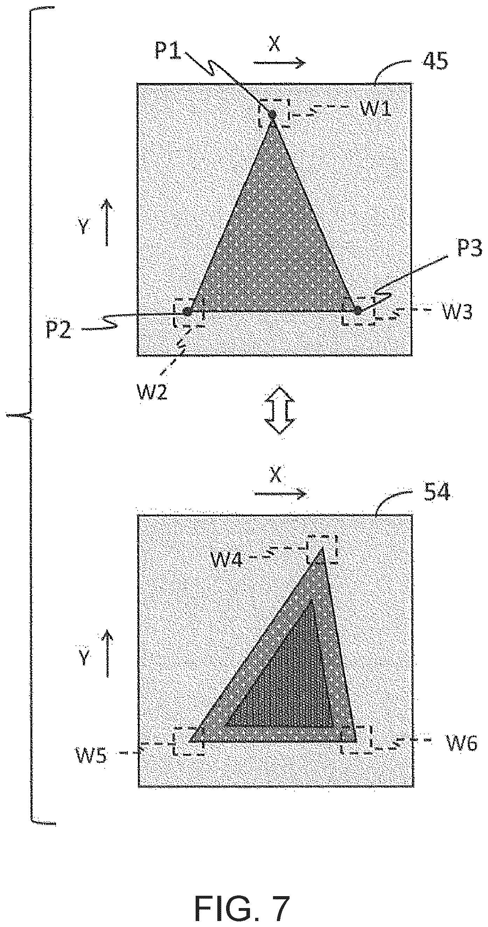

FIG. 7 exemplifies the second pattern image data 45 and second captured image data 54 to explain the step S170. The way of viewing the second captured image data 54 is the same as the way of viewing the first captured image data 50. The control section 11 sets rectangular regions W1, W2, and W3 including the feature points P1, P2, and P3 of the second pattern image data 45 substantially at their centers. Such rectangular regions W1, W2, and W3 are also referred to as regions of interest (ROI), regions to note, target regions, and the like.

The control section 11 extracts a region like the image of each of the rectangular regions W1, W2, and W3 from the second captured image data 54 by using an image collation technique such as template matching. As a result, from the second captured image data 54, a rectangular region W4 is extracted as a region like the rectangular region W1, a rectangular region W5 is extracted as a region like the rectangular region W2, and a rectangular region W6 is extracted as a region like the rectangular region W3. As described above, since the color tone of the second pattern image data 45 is close to the color tone of the first captured image data 50, it is also close to the color tone of the second captured image data 54. Therefore, step S170 is a collation operation between images having close color usage, and the accuracy is improved.

That is, even if influence of distortion of the fabric 30 on the shape of the pattern in the second captured image data 54 has occurred, the regions corresponding to the rectangular regions W1, W2, W3 including the feature points P1, P2, P3 in the second pattern image data 45 can be extracted with high accuracy from the second captured image data 54. The control section 11 calculates, for example, correction values for the coordinates of feature points P1, P2, and P3, which are required to match the relative positional relationship of the rectangular regions W1, W2, and W3 in the XY coordinate system with the relative positional relationship of the rectangular regions W4, W5, and W6. The correction value is a movement amount and a movement direction in the XY coordinate system.

In step S180, the control section 11 acquires the colored image data representing the colored image for coloring the pattern. That is, the color of the colored image is a color to be printed over the pattern of the fabric 30. The shape of the colored image represented by the colored image data is equal to the shape of the pattern represented by the first pattern image data or the second pattern image data. The colored image data is stored in advance, for example, in the storage section 18 and the control section 11 acquires the colored image data from the storage section 18. Alternatively, the colored image data is input from an external device via the communication IF 19, and the control section 11 acquires the input colored image data. The control section 11 may acquire the colored image data from a storage medium such as a memory card (not shown) externally attached to the printing device 10.

Then, the control section 11 deforms the colored image by applying the correction value calculated in step S170 to the colored image of the colored image data. That is, the correction value of the feature point is applied to the control point corresponding to the feature point of the second pattern image data in the colored image data to move the control point. The control section 11 deforms the region surrounded by the plurality of control points, that is, the colored image, in accordance with the movement of each of the plurality of control points. A process for deforming a region in accordance with movement of a control point is known.

In step S190, the control section 11 causes the printing section 17 to print the colored image after the deformation in step S180 on the fabric 30 transported by the transport section 16. The fabric 30 being transported at this point in time is the medium from which the imaging section 15 captured an image to generate the second captured image data. Needless to say, printing of the colored image that has been deformed is printing based on the print data generated from the colored image data including the deformed colored image. The process of control section 11 generating print data from the image data is a general image process such as a color conversion process or a halftone process, and therefore details thereof are omitted.

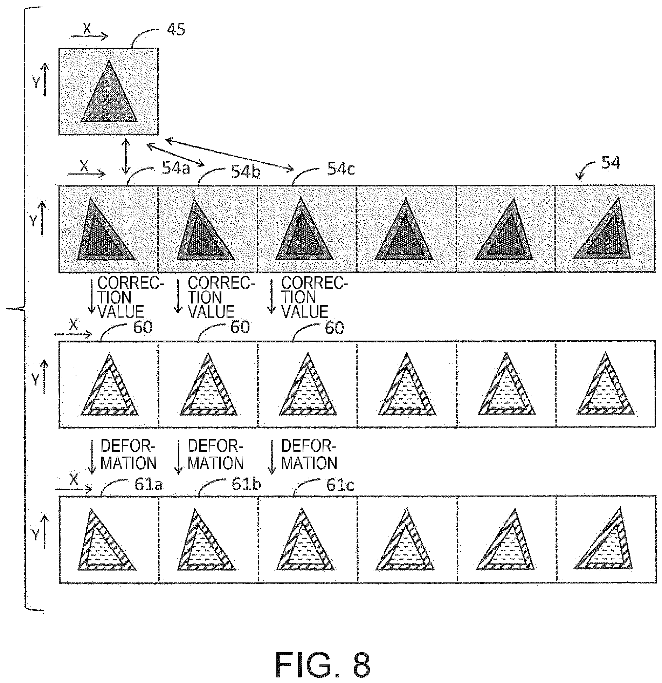

FIG. 8 is a diagram for explaining a specific example of steps S170 and S180 of the printed matter production process S2. FIG. 8 shows the second pattern image data 45 and the second captured image data 54. The second captured image data 54 shown in FIG. 8 is a result of capturing an image of the entire width of the fabric 30 in the width direction D2 and in length range that includes one pattern in the transport direction D1 (hereinafter, a predetermined range). In the second captured image data 54, plural patterns are aligned along the width direction D2, that is, the X-axis direction. In FIG. 8, the second captured image data 54 is divided into unit-pattern regions 54a, 54b, 54c, ... each including one pattern for easy understanding. The broken lines dividing the unit-pattern regions 54a, 54b, 54c, ... do not actually exist. The second captured image data 54 shown in FIG. 7 corresponds to one unit-pattern region.

In step S170, the control section 11 collates the second pattern image data 45 with each of the unit-pattern regions 54a, 54b, 54c, ... of the second captured image data 54 on a one-to-one basis, and calculates the correction values for each of the unit-pattern regions 54a, 54b, 54c, ... as described above. Since the degree of distortion of the fabric 30 may differ for each of the unit-pattern regions 54a, 54b, 54c, the calculated correction values may also differ for each of the unit-pattern regions 54a, 54b, 54c, ....

FIG. 8 shows plural sets of colored image data 60 corresponding to one pattern. In step S180, the control section 11 generates a group of the plural sets of colored image data 60 by arranging the colored image data 60 along the X-axis direction so as to correspond to each pattern of the second captured image data 54 for a certain range. Then, the correction value calculated for each of the unit-pattern regions 54a, 54b, 54c, ... is applied to each set of colored image data 60 in the group of plural sets of colored image data 60 to deform the colored image.

For example, the control section 11 applies a correction value that was calculated by collating the unit-pattern region 54a located at the leftmost position in the viewpoint of FIG. 8 and the second pattern image data 45 to the leftmost set of colored image data 60 in the group of plural sets of colored image data 60 and generates colored image data 61a, which is the colored image data 60 after colored image deformation. Similarly, the control section 11 applies a correction value that was calculated by collating the unit-pattern region 54b located the second from the left in the viewpoint of FIG. 8 and the second pattern image data 45 to the colored image data 60 of the second from the left in the group of plural sets of colored image data 60, and generates colored image data 61b, which is the colored image data 60 after the colored image deformation. Hereinafter, similarly, a correction value that was calculated by collating the unit-pattern region 54c located third from the leftmost and the second pattern image data 45 is applied to the colored image data 60 of the third from left in the group of plural sets of colored image data 60, and colored image data 61c, which is the colored image data 60 after the color image deformation, is generated.

In step S190, the control section 11 causes the printing section 17 to print a group of the sets of colored image data for a certain range in which the colored image data 61a, 61b, 61c, ... are arranged on a certain range of the fabric 30. By this, the colored image is printed in a shape without deviation with respect to the shape of the pattern on the transported fabric 30. The transport speed of the medium by the transport section 16 and the distances from the imaging section 15 to the print head 22 in the transport direction D1 are known to the control section 11. Therefore, the control section 11 may execute steps S170 and S180 during a period until a certain range of the fabric 30 from which an image was captured by the imaging section 15 in step S160 reaches the position of the print head 22 and may execute printing in step S190 at a predetermined timing when the certain range reaches the position of the print head 22. By repeating the cycle of steps S160 to S190 for a predetermined range of the fabric 30, the control section 11 can continuously print on the fabric 30 in which a plurality of predetermined ranges are continuous in the transport direction D1.

### 3. Summary

As described above, according to the present embodiment, the printing device 10 includes the transport section 16 that transports the medium on which the pattern is formed in the transport direction D1; the imaging section 15 that captures the medium transported by the transport section 16; the printing section 17 configured to perform printing on the medium transported by the transport section 16; and the control section 11. As the preparation process S1 for printed matter production process S2, which includes printing by the printing section 17, the control section 11 acquires first pattern image data having information of the shape of the pattern and first captured image data generated by capturing an image of the medium by the imaging section 15, specifies a first feature color and a second feature color that is brighter than the first feature color from the first captured image data, generates binary image data with a first color and a second color brighter than the first color by binarization of the first pattern image data, generates second pattern image data by replacing the first color of the binary image data with the first feature color and replacing the second color with the second feature color, and sets a feature point for an edge of a pattern in the second pattern image data. Then, as the printed matter production process S2, it acquires second captured image data generated by capturing an image of the medium by the imaging section 15, calculates a correction value of the feature point required to match the shape of the pattern in the second pattern image data with the shape of the pattern in the second captured image data based on the collation between the second captured image data and the second pattern image data, deforms the colored image by applying the correction value to a colored image for coloring the pattern, and causes the printing section 17 to print, on the medium, the colored image that the imaging section 15 captured for generation of the second captured image data and that has been deformed.

According to the above configuration, the control section 11 generates the second pattern image data by applying the first feature color and the second feature color specified from the first captured image data to the binary image data of the first pattern image data. By this, the color tone of the second captured image data and the color tone of the second pattern image data approach each other. Therefore, the accuracy of collation such as template matching between the second captured image data and the second pattern image data is improved, and an appropriate correction value can be obtained. As a result, since the colored image that was accurately deformed by the correction value is printed on the medium, even when distortion occurs in the medium being transported, it is possible to obtain a high-quality printing result in which the shapes of the pattern of the medium and the colored image coincide with each other and there is no deviation. According to the present embodiment, since the user does not need to manually perform the editing work of matching the shape of the colored image with the shape of the pattern in the captured image data of the medium being transported, it is possible to obtain a high-quality printing result with a smaller burden than in the related art.

According to the present embodiment, in the preparation process S1, the control section 11 generates a histogram of colors in the first captured image data, and specifies, as the first feature color and the second feature color, the colors corresponding to the peaks of the distribution appearing in the histogram.

According to the above configuration, the control section 11 can easily and accurately specify the feature color, which is the main color in the medium having the pattern.

### 4. SECOND EMBODIMENT

The embodiment described-above is referred to as the first embodiment, and a second embodiment will be described below. The description of the second embodiment common to the first embodiment will be omitted.

In the preparation process S1, the control section 11 may generate, as the second pattern image data, plural sets of second pattern image data in which the shapes of the patterns are made different according to the degree of distortion of the medium corresponding to the position in the width direction D2, which intersects the transport direction D1. Then, in the printed matter production process S2, the correction value may be calculated by the collation between the second captured image data and the second pattern image data for each position in the width direction D2, and the correction values corresponding to the positions in the width direction D2 may be applied to each of a plurality of colored images that were deformed in advance according to the degree of distortion according to the positions in the width direction D2.

"Degree of distortion of the medium according to the positions in the width direction D2" is the tendency of distortion that is known in advance from the peculiarities of the transport section 16 and the characteristics of the medium, for example, a tendency of the fabric 30 to stretch more with proximity to the end of the endless belt 23 in the width direction D2, the tendency of the fabric 30 to distort to the right side at the right side from viewpoint from upstream to downstream, and the like. Here, it does not matter what the tendency of the distortion is, but in any case, it is assumed that the control section 11 recognizes in advance the tendency of the distortion according to the position of the width direction D2. Then, in step S140, the control section 11 generates plural sets of second pattern image data corresponding to the position in the width direction D2 by further changing the shape of the pattern according to the degree of distortion of the medium corresponding to the position in the width direction D2 on the second pattern image data generated by applying the first feature color and the second feature color to the binary image data as described above. That is, a distortion that known in advance is generated in the shape of the pattern of the second pattern image data.

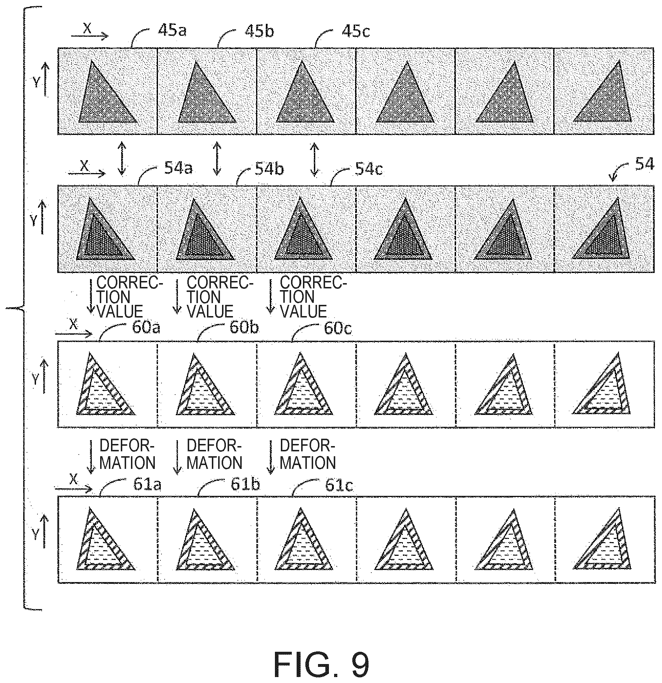

FIG. 9 Is a diagram for explaining the second embodiment. With respect to FIG. 9, the points different from FIG. 8 will be mainly described. According to FIG. 9, the plural sets of second pattern image data 45a, 45b, 45c, ... are generated as the second pattern image data 45. The plural sets of second pattern image data 45a, 45b, 45c, ... are plural sets of second pattern image data generated in the preparation process S1 by varying the shape of the pattern according to the degree of distortion of the medium corresponding to the position in the width direction D2.

As can be seen from FIG. 9, in step S170, the control section 11 collates the unit-pattern region 54a of the second captured image data 54 and the second pattern image data 45a corresponding to each other in the position in the width direction D2 and calculates a correction value. Similarly, the correction value is calculated by collating the unit-pattern region 54b corresponding to the position in the width direction D2 with the second pattern image data 45b, and the correction value is calculated by collating the unit-pattern region 54c corresponding to the position in the width direction D2 with the second pattern image data 45c.

Further, according to FIG. 9, a group of colored image data 60a, 60b, 60c, ... is generated as a group of a plural sets of colored image data 60 arranged along the X-axis direction. In other words, each of the colored image data 60a, 60b, 60c, ... represents a colored image that has been deformed in advance in accordance with the degree of distortion corresponding to the position in the width direction D2. In the second embodiment, the sets of colored image data 60a, 60b, 60c, ... are generated in advance, and the control section 11 may acquire them from a predetermined acquiring source in step S180, or the colored image data 60a, 60b, 60c, ... may be generated from the colored image data 60 acquired by the control section 11 at the timing of step S180.

Then, in step S180, the control section 11 applies the correction value calculated from the collation between unit-pattern region 54a and the second pattern image data 45a to the colored image data 60a and generates the colored image data 61a after the colored image deformation. Similarly, the control section 11 applies the correction value calculated from the collation between the unit-pattern region 54b and the second pattern image data 45b to the colored image data 60b and generates the colored image data 61b after the colored image deformation. Hereinafter, similarly, it applies the correction value calculated from the collation between the unit-pattern region 54c and the second pattern image data 45c to the colored image data 60c and generates the post-deformation colored image data 61c.

According to the second embodiment described above, the control section 11 uses, as the second pattern image data, plural sets of second pattern image data in which the shape of the pattern was changed according to the degree of distortion of the medium according to the position in the width direction D2, and uses, as the colored image, a plurality of colored images that were deformed in advance according to the degree of distortion according to the position in the width direction D2. By this, as compared to a case where the same second pattern image data and colored image data are used regardless of the position in the width direction D2, the calculation of the correction value and the deformation by the correction value can be simplified, and it is easy to avoid a disadvantage such as the occurrence of an error due to excessive deformation of the colored image. In some cases, the amount of deformation due to the correction value is almost zero. In the example of FIG. 9, priority is given to representing the difference among the second pattern image data 45a, 45b, 45c, ... and the difference among the colored image data 60a, 60b, 60c, ... and the visible deformation due to the correction value is not represented.

### 5. Other explanations

Even if only a part of a combination of claims is described in the scope of claims, the present embodiment includes not only a one-to-one combination of independent claims and dependent claims, but also various combinations of a plurality of dependent claims in the disclosure range.

The present embodiment discloses various categories of disclosures other than the printing device, such as a system, a method, and program code for realizing the method in cooperation with a processor.

For example, the printing method includes an image capturing step of capturing an image of a medium that is transported in the transport direction and forming a pattern on it, a printed matter production step including printing on the medium to be transported in the transport direction, and a preparation step for the printed matter production step. The image capturing step is included in step S110 and step S160. The image capturing step of step S110 is referred to as a first image capturing step, the image capturing step of step S160 is referred to as a second image capturing step. The preparation step includes acquiring the first pattern image data having information on a shape of the pattern and the first captured image data generated by capturing the image of the medium in a first one of the image capturing step, specifying a first feature color and a second feature color that is brighter than the first feature color from the first captured image data, generating binary image data with a first color and a second color brighter than the first color by binarization of the first pattern image data, generating second pattern image data by replacing the first color of the binary image data with the first feature color and replacing the second color with the second feature color, and setting a feature point for an edge of a pattern in the second pattern image data. Then, the printed matter production step includes, acquiring second captured image data generated by imaging the medium in a second image capturing step, calculating a correction value of a feature point necessary for matching the shape of a pattern in the second pattern image data to the shape of the pattern in the second captured image data based on the collation between the second captured image data and the second pattern image data, deforming the colored image for coloring the pattern with applying the correction value, and printing the colored image, that is captured in the second image capturing step, after deformation against the medium.

## Claims

1. A printing device (10) comprising:
a transport section (16) that transports in a transport direction a medium on which a pattern is formed;
an imaging section (15) that captures an image of the medium transported by the transport section (16);
a printing section (17) configured to print on the medium transported by the transport section (16); and
a control section (11), wherein
the control section (11),
as preparation processing for print production processing, which includes printing by the printing section (17),
acquires first pattern image data (40) having information of the shape of the pattern and first captured image data (50) that was generated by the imaging section (15) capturing the image of the medium,
specifies, from the first captured image data (50), a first feature color and a second feature color that is brighter than the first feature color,
generates binary image data (44) with a first color and a second color that is brighter than the first color by binarization of the first pattern image data (40),
generates second pattern image data (45) by replacing the first color of the binary image data (44) with the first feature color and replacing the second color with the second feature color, and
sets a feature point (P1, P2, P3) for an edge of a pattern in the second pattern image data (45) and
as the print production process,
acquires second captured image data (54) generated by capturing an image of the medium by the imaging section (15),
calculates, based on collation between the second captured image data (54) and the second pattern image data (45), a correction value of the feature point (P1, P2, P3) required to match the shape of the pattern in the second pattern image data (45) with the shape of the pattern in the second captured image data (54),
applies the correction value to a colored image (60) for coloring the pattern in order to deform the colored image (60), and
causes the printing section (17) to print, on the medium, the colored image (60) that was captured by the imaging section (15) for generation of the second captured image data (54) and that was deformed.

2. The printing device (10) according to claim 1, wherein
in the preparation process, the control section (11) generates a histogram of colors in the first captured image data (50) and specifies colors corresponding to peaks of a distribution appearing in the histogram as the first feature color and the second feature color.

3. The printing device (10) according to claim 1, wherein
the control section (11),
in the preparation process, generates a plurality of second pattern image data (45) in which a shape of the pattern is made different according to a degree of distortion of the medium according to position in a width direction, which intersects the transport direction and
in the print production process, calculates the correction value by collation between the second captured image data (54) and the second pattern image data (45) for each position in the width direction and applying the correction value according to position in the width direction to each of a plurality of colored images (60) which are deformed in advance according to the degree of distortion according to position in the width direction.

4. A printing method comprising:
an image capturing step for capturing an image of a medium that is transported in a transport direction and on which a pattern is formed;
a printed matter production step including printing on the medium transported in the transport direction; and
a preparation step for the printed matter production step, wherein
the preparation step includes
acquiring first pattern image data (40) having information on a shape of the pattern and first captured image data (50) generated by capturing the image of the medium in a first one of the image capturing step,
specifying, from the first captured image data (50), a first feature color and a second feature color that is brighter than the first feature color,
generating binary image data (44) with a first color and a second color that is brighter than the first color by binarization of the first pattern image data (40),
generating second pattern image data (45) by replacing the first color of the binary image data (44) with the first feature color and replacing the second color with the second feature color, and
setting a feature point (P1, P2, P3) for an edge of a pattern in the second pattern image data (45) and
the printed matter production step includes
acquiring second captured image data (54) generated by imaging the medium in a second one of the image capturing step,
calculating, based on collation between the second captured image data (54) and the second pattern image data (45), a correction value of the feature point (P1, P2, P3) required to match the shape of the pattern in the second pattern image data (45) with the shape of the pattern in the second captured image data (54),
applying the correction value to a colored image (60) for coloring the pattern in order to deform the colored image (60), and
printing, on the medium, the colored image (60) that was captured in the second image capturing step and that has been deformed.

## Patentansprüche

1. Druckvorrichtung (10), umfassend:
einen Transportabschnitt (16), der ein Medium, auf dem ein Muster gebildet ist, in einer Transportrichtung transportiert;
einen Bildgebungsabschnitt (15), der ein Bild des Mediums aufnimmt, das von dem Transportabschnitt (16) transportiert wird;
einen Druckabschnitt (17), der eingerichtet ist, auf dem Medium zu drucken, das von dem Transportabschnitt (16) transportiert wird; und
einen Steuerabschnitt (11), wobei
der Steuerabschnitt (11) als Vorbereitungsverarbeitung zur Druckerzeugungsverarbeitung, die Drucken durch den Druckabschnitt (17) enthält,
erste Musterbilddaten (40) mit Informationen über die Form des Musters und erste aufgenommene Bilddaten (50) erlangt, die von dem Bildgebungsabschnitt (15) generiert wurden, der das Bild des Mediums aufnimmt,
aus den ersten aufgenommenen Bilddaten (50) eine erste Merkmalsfarbe und eine zweite Merkmalsfarbe, die heller als die erste Merkmalsfarbe ist, spezifiziert,
binäre Bilddaten (44) mit einer ersten Farbe und einer zweiten Farbe, die heller als die erste Farbe ist, durch Binärisierung der ersten Musterbilddaten (40) generiert,
zweite Musterbilddaten (45) durch Ersetzen der ersten Farbe der binären Bilddaten (44) durch die erste Merkmalsfarbe und Ersetzen der zweiten Farbe durch die zweite Merkmalsfarbe generiert, und
einen Merkmalspunkt (P1, P2, P3) für einen Rand eines Musters in den zweiten Musterbilddaten (45) einstellt, und
als den Druckerzeugungsprozess
zweite aufgenommene Bilddaten (54) erlangt, die durch Aufnehmen eines Bildes des Mediums durch den Bildgebungsabschnitt (15) generiert werden,
basierend auf einem Abgleich zwischen den zweiten aufgenommenen Bilddaten (54) und den zweiten Musterbilddaten (45) einen Korrekturwert des Merkmalspunkts (P1, P2, P3) berechnet, der erforderlich ist, um die Form des Musters in den zweiten Musterbilddaten (45) mit der Form des Musters in den zweiten aufgenommenen Bilddaten (54) übereinzustimmen,
den Korrekturwert an einem Farbbild (60) zum Färben des Musters anwendet, um das Farbbild (60) zu verformen, und
den Druckabschnitt (17) veranlasst, auf dem Medium das Farbbild (60) zu drucken, das durch den Bildgebungsabschnitt (15) zum Generieren der zweiten aufgenommenen Bilddaten (54) aufgenommen wurde und das verformt wurde.

2. Druckvorrichtung (10) nach Anspruch 1, wobei
in dem Vorbereitungsprozess der Steuerabschnitt (11) ein Farbhistogramm in den ersten aufgenommenen Bilddaten (50) generiert und Farben, die Spitzen einer Verteilung entsprechen, die in dem Histogramm erscheinen, als die erste Merkmalsfarbe und die zweite Merkmalsfarbe spezifiziert.

3. Druckvorrichtung (10) nach Anspruch 1, wobei
der Steuerabschnitt (11)
in dem Vorbereitungsprozess mehrere zweite Musterbilddaten (45) generiert, in welchen eine Form des Musters gemäß einem Verzerrungsgrad des Mediums gemäß einer Position in einer Breitenrichtung, die die Transportrichtung schneidet, anders gestaltet wird, und
in dem Druckerzeugungsprozess den Korrekturwert durch einen Abgleich zwischen den zweiten aufgenommenen Bilddaten (54) und den zweiten Musterbilddaten (45) für jede Position in der Breitenrichtung berechnet und den Korrekturwert gemäß einer Position in der Breitenrichtung auf jedes von mehreren Farbbildern (60) anwendet, die im Voraus gemäß dem Verzerrungsgrad gemäß einer Position in der Breitenrichtung verformt wurden.

4. Druckverfahren, umfassend:
einen Bildaufnahmeschritt zum Aufnehmen eines Bildes eines Mediums, das in einer Transportrichtung transportiert wird und auf dem ein Muster gebildet ist;
einen Drucksachenerzeugungsschritt, der Drucken auf dem Medium enthält, das in der Transportrichtung transportiert wird; und
einen Vorbereitungsschritt für den Drucksachenerzeugungsschritt, wobei
der Vorbereitungsschritt enthält
Erlangen erster Musterbilddaten (40) mit Informationen über eine Form des Musters und erster aufgenommener Bilddaten (50), die durch Aufnehmen des Bildes des Mediums in einem ersten Bildaufnahmeschritt generiert werden,
Spezifizieren, aus den ersten aufgenommenen Bilddaten (50), einer ersten Merkmalsfarbe und einer zweiten Merkmalsfarbe die heller als die erste Merkmalsfarbe ist,
Generieren von binären Bilddaten (44) mit einer ersten Farbe und einer zweiten Farbe, die heller als die erste Farbe ist, durch Binärisierung der ersten Musterbilddaten (40),
Generieren zweiter Musterbilddaten (45) durch Ersetzen der ersten Farbe der binären Bilddaten (44) durch die erste Merkmalsfarbe und Ersetzen der zweiten Farbe durch die zweite Merkmalsfarbe und
Einstellen eines Merkmalspunkts (P1, P2, P3) für einen Rand eines Musters in den zweiten Musterbilddaten (45) und
der Drucksachenerzeugungsschritt enthält
Erlangen der zweiten aufgenommenen Bilddaten (54), die durch Abbilden des Mediums in einem zweiten Bildaufnahmeschritt generiert wurden,
Berechnen, basierend auf einem Abgleich zwischen den zweiten aufgenommenen Bilddaten (54) und den zweiten Musterbilddaten (45), eines Korrekturwerts des Merkmalspunkts (P1, P2, P3), der erforderlich ist, um die Form des Musters in den zweiten Musterbilddaten (45) mit der Form des Musters in den zweiten aufgenommenen Bilddaten (54) übereinzustimmen,
Anwenden des Korrekturwerts auf ein Farbbild (60) zum Färben des Musters, um das Farbbild (60) zu verformen, und
Drucken, auf dem Medium, des Farbbilds (60), das in dem zweiten Bildaufnahmeschritt aufgenommen wurde und das verformt wurde.

## Revendications

1. Dispositif d'impression (10) comprenant :
une section de transport (16) transportant, dans une direction de transport, un support sur lequel est formé un motif ;
une section d'imagerie (15) capturant une image du support transporté par la section de transport (16) ;
une section d'impression (17) configurée pour effectuer une impression sur le support transporté par la section de transport (16) ; et
une section de commande (11), dans lequel
la section de commande (11),
en tant que traitement de préparation pour un traitement de production d'impression incluant une impression par la section d'impression (17),
acquiert des premières données d'image de motif (40) contenant des informations relatives à la forme du motif, et des premières données d'image capturée (50) générées par la section d'imagerie (15) capturant l'image du support,
spécifie, à partir des premières données d'image capturée (50), une première couleur caractéristique et une deuxième couleur caractéristique plus lumineuse que la première couleur caractéristique,
génère des données d'image binaires (44) comportant une première couleur et une deuxième couleur plus lumineuse que la première couleur, par binarisation des premières données d'image de motif (40),
génère des deuxièmes données d'image de motif (45) en remplaçant la première couleur des données d'image binaires (44) par la première couleur caractéristique et en remplaçant la deuxième couleur par la deuxième couleur caractéristique, et
définit un point caractéristique (P1, P2, P3) sur un bord d'un motif dans les deuxièmes données d'image de motif (45) et,
en tant que traitement de production d'impression,
acquiert des deuxièmes données d'image capturée (54) générées par la capture d'une image du support par la section d'imagerie (15),
calcule, sur la base d'une mise en correspondance entre les deuxièmes données d'image capturée (54) et les deuxièmes données d'image de motif (45), une valeur de correction du point caractéristique (P1, P2, P3) requise pour faire correspondre la forme du motif dans les deuxièmes données d'image de motif (45) avec la forme du motif dans les deuxièmes données d'image capturée (54),
applique la valeur de correction à une image colorée (60) destinée à colorer le motif afin de déformer l'image colorée (60), et
amène la section d'impression (17) à imprimer, sur le support, l'image colorée (60) capturée par la section d'imagerie (15) pour générer les deuxièmes données d'image capturée (54) et déformée.

2. Dispositif d'impression (10) selon la revendication 1, dans lequel
dans le traitement de préparation, la section de commande (11) génère un histogramme de couleurs dans les premières données d'image capturée (50) et spécifie des couleurs correspondant à des pics d'une distribution apparaissant dans l'histogramme, en tant que première couleur caractéristique et deuxième couleur caractéristique.

3. Dispositif d'impression (10) selon la revendication 1, dans lequel
la section de commande (11),
dans le traitement de préparation, génère une pluralité de deuxièmes données d'image de motif (45) dans lesquelles une forme du motif est rendue différente selon un degré de distorsion du support en fonction d'une position dans une direction de largeur, laquelle coupe la direction de transport, et
dans le traitement de production d'impression, calcule la valeur de correction par mise en correspondance entre les deuxièmes données d'image capturée (54) et les deuxièmes données d'image de motif (45), pour chaque position dans la direction de largeur, et applique la valeur de correction en fonction de la position dans la direction de largeur à chacune parmi une pluralité d'images colorées (60) déformées à l'avance en fonction du degré de distorsion, selon la position dans la direction de largeur.

4. Procédé d'impression comprenant :
une étape de capture d'image permettant de capturer une image d'un support, lequel est transporté dans une direction de transport et sur lequel est formé un motif ;
une étape de production d'un imprimé incluant une impression sur le support transporté dans la direction de transport ; et
une étape de préparation à l'étape de production d'un imprimé, dans lequel
l'étape de préparation inclut
l'acquisition de premières données d'image de motif (40) contenant des informations relatives à une forme du motif, et de premières données d'image capturée (50) générées par la capture de l'image du support lors d'une première occurrence de l'étape de capture d'image,
la spécification, à partir des premières données d'image capturée (50), d'une première couleur caractéristique et d'une deuxième couleur caractéristique plus lumineuse que la première couleur caractéristique,
la génération de données d'image binaires (44) comportant une première couleur et une deuxième couleur plus lumineuse que la première couleur, par binarisation des premières données d'image de motif (40),
la génération de deuxièmes données d'image de motif (45) par remplacement de la première couleur des données d'image binaires (44) par la première couleur caractéristique et par remplacement de la deuxième couleur par la deuxième couleur caractéristique, et
la définition d'un point caractéristique (P1, P2, P3) sur un bord d'un motif dans les deuxièmes données d'image de motif (45) et
l'étape de production d'un imprimé inclut
l'acquisition de deuxièmes données d'image capturée (54) générées par imagerie du support lors d'une deuxième occurrence de l'étape de capture d'image,
le calcul, sur la base d'une mise en correspondance entre les deuxièmes données d'image capturée (54) et les deuxièmes données d'image de motif (45), d'une valeur de correction du point caractéristique (P1, P2, P3) requise pour faire correspondre la forme du motif dans les deuxièmes données d'image de motif (45) avec la forme du motif dans les deuxièmes données d'image capturée (54),
l'application de la valeur de correction à une image colorée (60) destinée à colorer le motif afin de déformer l'image colorée (60), et
l'impression, sur le support, de l'image colorée (60) capturée lors de la deuxième étape de capture d'image et déformée.
